# FASCICULE DE BREVET EUROPEEN

(11) **EP 1 977 152 B1**
(45) Date de publication et mention de la délivrance du brevet: **27.07.2011**
(21) Numéro de dépôt: 07718016.4
(22) Date de dépôt: 18.01.2007
(51) Int. Cl.: F16L 21/08, F16L 17/035

(54) **JONCTION TUBULAIRE**
ROHRFÖRMIGE VERBINDUNG
TUBULAR JOINT

(30) Priorité: 23.01.2006 FR 0600597
(43) Date de publication de la demande: 08.10.2008
(73) Titulaire: Saint-Gobain PAM, 54000 Nancy (FR)
(72) Inventeur: VITEL, Jean-Pierre, F-54470 Thiaucourt-Regnieville (FR); GROJEAN, Daniel, F-54840 Gondreville (FR); RENARD, Philippe, F-54710 Fleville (FR)
(74) Mandataire: Blot, Philippe Robert Emile
(86) Numéro de dépôt international: PCT/FR2007/000093
(87) Numéro de publication internationale: WO 2007/083028

(56) Documents cités:
- EP-A1- 0 541 472
- EP-A2- 0 899 495
- FR-A- 2 054 833
- FR-A- 2 142 224
- GB-A- 2 376 994
- US-A- 3 856 315

## Description

La présente invention concerne une jonction tubulaire, du type indiqué dans le préambule de la revendication 1.

Une telle jonction est connue de GB 2 376 994. EP 899 495, EP541 472 et FR 2 142 224 décrivent d'autres jonctions.

Elle s'applique notamment aux canalisations transportant de l'eau potable ou des eaux usées pour l'assainissement.

On connaît dans l'état de la technique de tels jonctions tubulaires. Lorsque la jonction tubulaire est à l'état posé, et lorsqu'un fluide sous pression circule dans les éléments de canalisation, la garniture d'étanchéité risque d'être extrudée, voire expulsée entre le bout à emboîtement et le bout uni sous l'action du fluide sous pression.

En conséquence, la jonction tubulaire connue a une fiabilité limitée.

C'est pourquoi l'invention a pour but d'augmenter la fiabilité d'une jonction tubulaire du type indiqué.

A cet effet, l'invention a pour objet une jonction tubulaire du type indiqué dans la revendication 1.

Selon des modes particuliers de réalisation, la jonction tubulaire comporte l'une ou plusieurs des caractéristiques indiquées dans les revendications dépendantes.

L'invention sera mieux comprise à la lecture de la description qui va suivre, donnée uniquement à titre d'exemple et faite en se référant aux dessins annexés, sur lesquels :
- la Figure 1 est une vue en perspective d'une jonction tubulaire à l'état non-assemblé ;
- la Figure 2 est une coupe longitudinale d'une partie de la jonction tubulaire de la Figure 1 à l'état assemblé;
- la Figure 3 est une vue identique à celle de la Figure 2 d'une jonction tubulaire selon un premier mode de réalisation de l'invention
- la Figure 4 est une vue en perspective d'une bague anti-extrusion utilisée dans la jonction tubulaire de la Figure 3 ;[suite page 4]
- la Figure 5 est une vue correspondant à la celle de la Figure 2 d'une jonction tubulaire selon un deuxième mode de réalisation de l'invention ;
- la Figure 6 est une vue en perspective de la bague anti-extrusion de la jonction tubulaire de la Figure 5 ;
- la Figure 7 montre une jonction tubulaire selon un troisième mode de réalisation de l'invention, la vue correspondant à celle de la Figure 2 ; et
- la Figure 8 montre une vue de côté, partiellement coupée, d'une bague anti-extrusion utilisée dans la jonction tubulaire de la Figure 7.

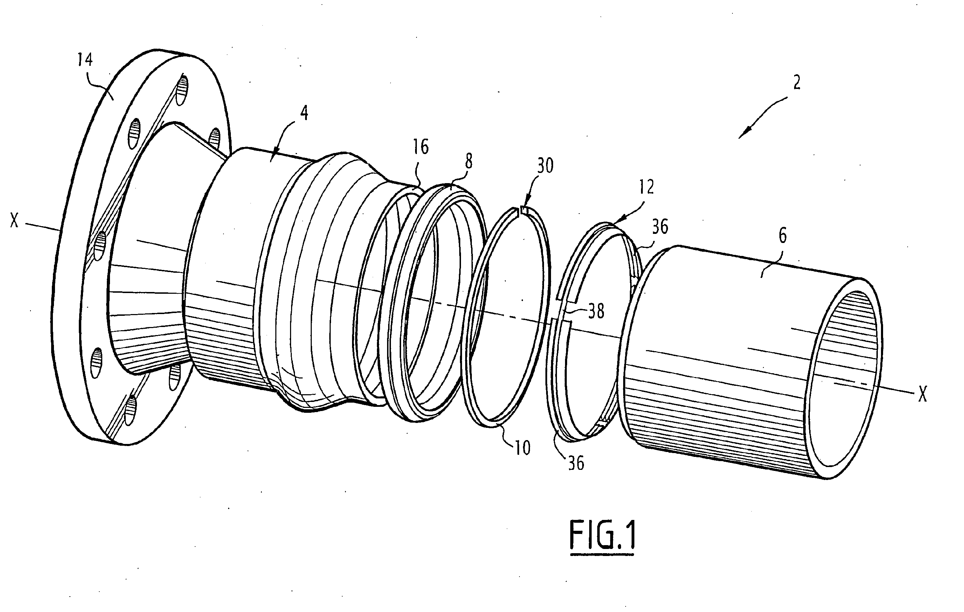

La Figure 1 montre une jonction tubulaire désignée par la référence générale 2.

La jonction tubulaire 2 comporte un premier élément de canalisation muni d'un bout à emboîtement 4, un second élément de canalisation muni d'un bout uni 6, une garniture d'étanchéité 8, une bague anti-extrusion 10 et une bague de verrouillage 12 fendue.

La jonction tubulaire 2 définit un axe central X-X. Dans ce qui suit les expressions « axialement », « radialement » et « circonférentiellement » seront utilisées par rapport à cet axe central X-X.

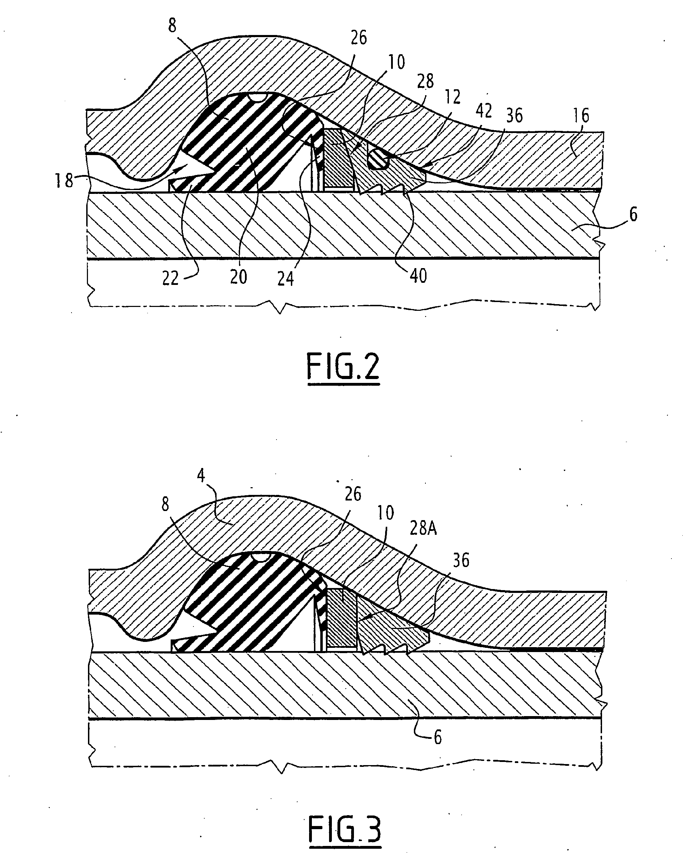

Le bout à emboîtement 4 comporte une bride de fixation 14 pour l'assemblage avec un élément de canalisation (non représenté) muni d'une bride correspondante, ainsi qu'une extrémité libre 16, tournée vers le bout uni 6. Le bout à emboîtement 4 comporte en outre une gorge annulaire intérieure 18 (voir Figure 2). En l'occurrence, la gorge 18 a une section transversale sensiblement en arc de cercle, mais elle peut avoir d'autres formes, par exemple une section rectangulaire.

Comme ceci est visible sur la Figure 2, à l'état assemblé de la jonction tubulaire, la garniture d'étanchéité 8, la bague anti-extrusion 10 et la bague de verrouillage 12 sont insérées dans la gorge intérieure 18 et le bout uni 6 est inséré dans l'extrémité libre 16 du bout à emboîtement. La garniture d'étanchéité 8 est disposée axialement du côté tourné vers la bride de fixation 14 et la bague de verrouillage 12 est disposée axialement du côté de l'extrémité libre 16, la bague anti-extrusion 10 étant prise en sandwich entre la garniture d'étanchéité 8 et la bague de verrouillage 12.

La garniture d'étanchéité 8 est par exemple fabriquée en caoutchouc. Elle comporte un corps de base 20, une lèvre d'étanchéité 22, ainsi qu'une lèvre de poussée 24, s'étendant radialement vers l'intérieur, et s'appliquant sur la bague anti-extrusion 10. La lèvre de poussée 24 sollicite élastiquement la bague anti-extrusion 10 axialement contre la bague de verrouillage 12.

La lèvre d'étanchéité 22 s'applique radialement contre le bout uni 6 lors de l'introduction de celui-ci dans le bout à emboîtement 4, et lors de la mise en pression, la lèvre d'étanchéité 22 s'applique contre le bout uni 6 d'autant plus fortement que la pression du fluide circulant dans les éléments de canalisation 4 et 6 est élevée. La jonction tubulaire est donc du type automatique dans la mesure où l'étanchéité est obtenue automatiquement lors de l'introduction du bout uni dans le bout à emboîtement 6 par compression radiale de la garniture d'étanchéité 8 entre les deux éléments de canalisation 4, 6.

La bague anti-extrusion 10 est une bague par exemple en métal ou en matière plastique rigide; tel que du polyamide 6-6. La bague anti-extrusion 10 comporte une surface plane 26 tournée vers la garniture d'étanchéité 8, ainsi qu'une surface tronconique 28 tournée vers la bague de verrouillage 12. Par ailleurs, comme ceci est visible sur la Figure 1, la bague anti-extrusion 10 comporte une fente radialement traversante 30 permettant le montage de la bague anti-extrusion 10 dans la gorge 18 par déformation élastique.

La bague de verrouillage 12 est constituée de deux éléments de verrouillage 36 métalliques en forme de segments d'arc de cercle, qui sont reliés par un jonc torique 38, par exemple en caoutchouc. En variante, la bague de verrouillage comporte plus de deux éléments de verrouillage 36.

Les éléments de verrouillage 36 comportent une rangée de dents 40 dirigées radialement vers l'intérieur et s'appliquant sur la surface extérieure du bout uni 6 à l'état assemblé. En outre, les éléments de verrouillage 36 comportent une surface extérieure 42, inclinée par rapport à l'axe X-X et s'appliquant contre une surface inclinée correspondante de la gorge intérieure 18 du bout à emboîtement 4. Ainsi, les éléments de verrouillage 36 s'opposent à un désassemblage du bout uni 6 et du bout à emboîtement 4.

Dans ce mode de réalisation, la bague anti-extrusion 10 est posée librement sur la garniture d'étanchéité 8 et la bague de verrouillage 12 est posée librement sur la bague anti-extrusion 10. Les trois composants garniture d'étanchéité 8, bague de verrouillage 12 et bague anti-extrusion 10 ne sont donc pas fixés l'un à l'autre et peuvent ainsi être fabriqués d'une manière indépendante l'un de l'autre.

Lors de la mise en pression, la bague anti-extrusion 10 empêche le caoutchouc de la garniture d'étanchéité 8 d'être extrudé à travers l'espace annulaire délimité par le diamètre intérieur du bout à emboîtement 4 et le diamètre extérieur du bout uni 6.

La Figure 3 représente une vue en coupe partielle d'une jonction tubulaire selon l'invention.

Cette jonction tubulaire diffère de celle des Figures 1 et 2 par ce qui suit.

La bague anti-extrusion 10 est une bague ouverte ayant deux extrémités circonférentielles 50, 52. Ces extrémités circonférentielles 50, 52 sont formées par deux parties circonférentielles 53A, 53B qui ont une épaisseur axiale réduite par rapport au reste de la bague anti-extrusion 10. Par ailleurs, les parties circonférentielles 53A, 53B se chevauchent circonférentiellement à l'état monté dans la gorge intérieure 18, de telle sorte que la projection axiale de la bague anti-extrusion 10 est fermée. Ainsi, la bague anti-extrusion 10 s'oppose particulièrement bien à une extrusion de la matière élastique de la garniture d'étanchéité 8 et s'adapte bien à différents diamètres du bout à emboîtement et du bout uni.

La bague anti-extrusion 10 est une bague ayant des surfaces frontales 26, 28A radiales parallèles sur lesquelles s'appliquent respectivement la garniture d'étanchéité 8 et les éléments de verrouillage 36.

En outre, les éléments de verrouillage 36 sont fixés de manière libérable à la bague anti-extrusion 10. A cet effet, la bague anti-extrusion 10 comporte des saillies d'encliquetage 56 qui coopèrent par enclenchement élastique avec des ergots 58 solidaires de chaque élément de verrouillage 36. Chaque élément de verrouillage 36 est donc fixé par complémentarité de formes à la bague anti-extrusion 10.

Ce mode de réalisation est particulièrement facile à adapter aux différents besoins de la jonction tubulaire. En effet, lorsqu'il n'est pas nécessaire de prévoir une jonction tubulaire verrouillée, les éléments de verrouillage 36 peuvent être omis, réduisant ainsi la matière utilisée pour la jonction. Lorsqu'une jonction tubulaire verrouillée est nécessaire, les éléments de verrouillage 36 sont clipsés sur la bague anti-extrusion 10.

En outre, ce mode de réalisation diminue le coût de revient de la jonction tubulaire étant donné que la même bague anti-extrusion 10 peut être fabriquée pour les jonctions verrouillées et non verrouillées.

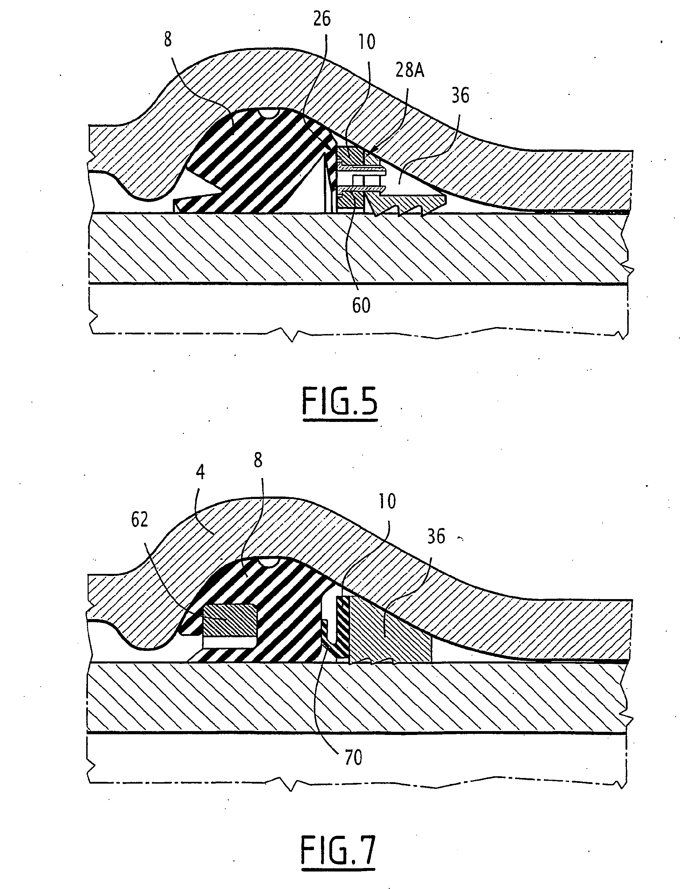

La Figure 5 montre un deuxième mode de réalisation d'une jonction tubulaire selon l'invention, qui diffère de celle de la Figure 3 par ce qui suit.

Les parties circonférentielles de la bague 10 adjacentes aux deux extrémités circonférentielles 50, 52 ne se chevauchent pas à l'état monté et sont dirigées l'une vers l'autre.

Les éléments de verrouillage 36 sont fixés par des rivets 60 à la bague anti-extrusion 10.

Par ailleurs, la bague anti-extrusion 10 a une épaisseur axiale sensiblement uniforme sur toute son étendue, à l'exception de trous recevant les rivets.

Ainsi, la bague 10 est particulièrement facile à fabriquer.

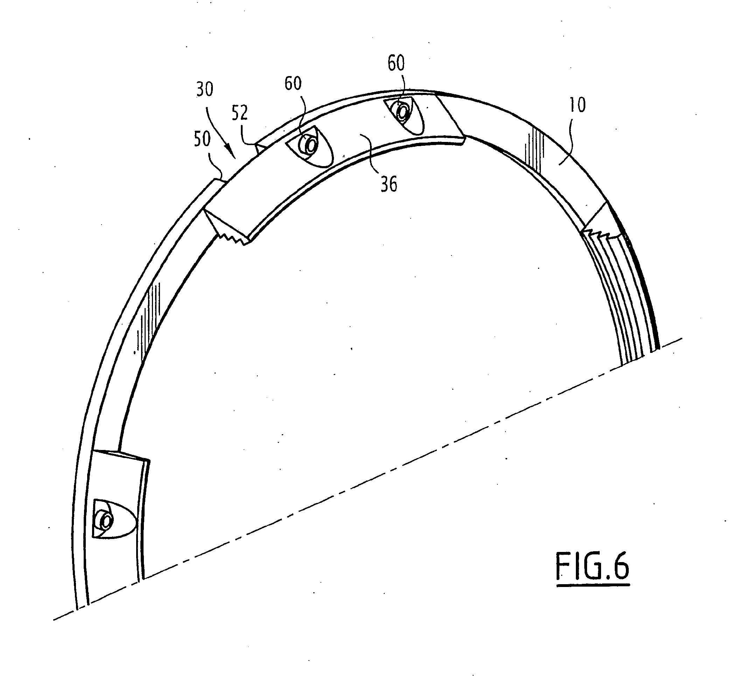

De plus, comme indiqué sur la Figure 6 et afin d'augmenter l'efficacité de retenue de la bague anti-extrusion 10, une partie d'un élément de verrouillage 36 chevauche complètement la fente 30 créée par les extrémités 52, 50 de la bague anti-extrusion, de telle manière que la projection axiale de la bague anti-extrusion 10 et des éléments de verrouillage 36 est fermée.

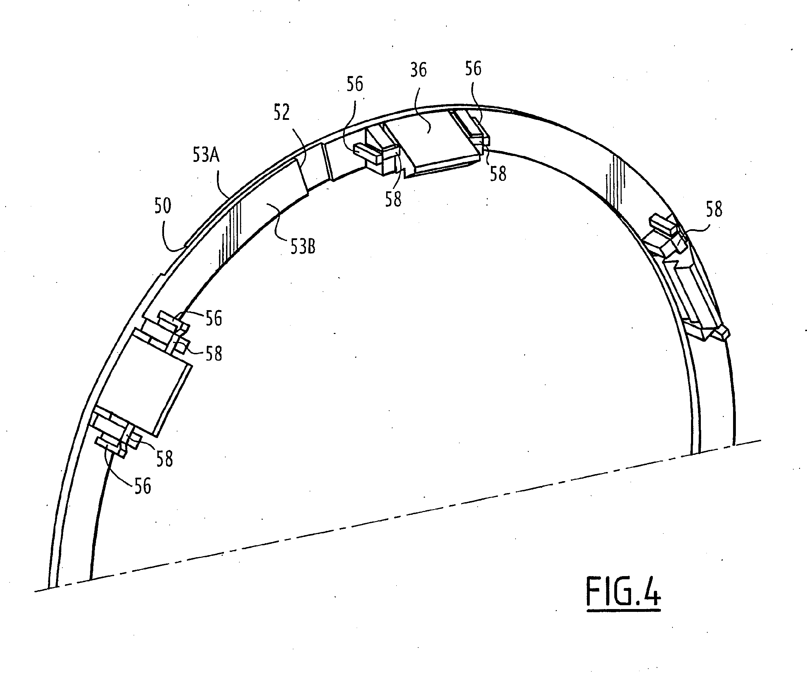

Ce mode de réalisation a les mêmes avantages que celui des Figures 3 et 4.

Sur la Figure 7 est montré un troisième mode de réalisation d'une jonction tubulaire selon l'invention.

Comme différence par rapport aux modes de réalisation précités, une bague de maintien 62 est disposée dans un creux de la garniture d'étanchéité 8 qui, par ailleurs, ne comporte pas de lèvre de poussée 24. Cette bague de maintien 62 est réalisée en matière plastique, tel que par exemple en polyéthylène, nylon ou polycarbonate ; elle comprime la garniture d'étanchéité 8 contre la surface intérieure du bout à emboîtement 4 et assure la stabilité de la garniture 8 dans la gorge 18.

En outre, la bague anti-extrusion 10 est munie d'une saillie de poussée 70 destinée à s'appliquer contre la garniture d'étanchéité 8 et adaptée pour pousser la bague anti-extrusion 10 axialement à l'écart de la garniture d'étanchéité 8. La saillie de poussée 70 a la forme d'une lèvre qui est dirigée radialement vers l'extérieur, et qui est fixée sur une partie radialement intérieure de la bague anti-extrusion 10.

Ainsi, à jeu minimal entre le bout uni 6 et le bout à emboîtement 4, cette saillie de poussée 70 se replie élastiquement et limite ainsi l'encombrement dans la gorge annulaire 18 servant de logement aux divers composants d'étanchéité et de verrouillage 8, 10, 12, offrant de ce fait un volume supplémentaire permettant de diminuer l'effort d'emboîtage du bout uni 6. A jeu maximal entre le bout uni 6 et le bout à emboîtement 4, cette lèvre 70 est dépliée et pousse les éléments de verrouillage 36 contre la surface intérieure du bout à emboîtement 4 préalablement à la mise en pression, limitant ainsi le recul du bout uni lors de la mise en pression. A jeu moyen, la lèvre 70 favorise l'accrochage des éléments de verrouillage 36 lors de la mise en pression, minimisant de ce fait le recul du bout uni 6.

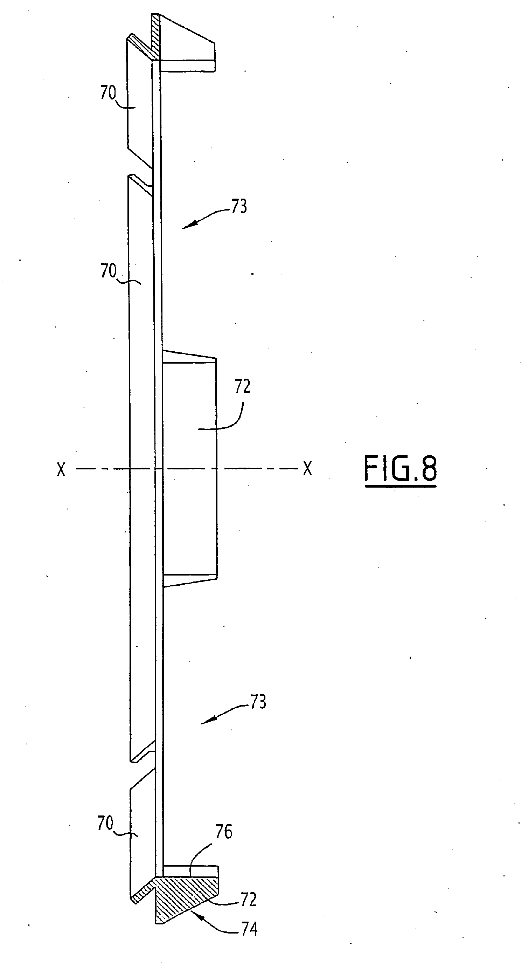

Sur la Figure 8, est montré une vue en coupe axiale de la bague anti-extrusion 10 avant la mise en place des éléments de verrouillage 36. Afin d'augmenter l'efficacité de la bague anti-extrusion 10, celle-ci comporte des éléments anti-extrusion 72 qui s'étendent sur une partie circonférentielle de la bague anti-extrusion 10, laissant ainsi entre eux des interstices 73 servant de logement aux éléments de verrouillage 36, ces derniers étant fixés à la bague anti-extrusion par tout moyen approprié. Les éléments anti-extrusion 72 ont une forme de segment d'anneau et ont une surface extérieure 74 en forme de tronc de cône partiel qui est dirigée à l'état monté vers l'extrémité libre 16 du bout à emboîtement 4. En outre, chaque élément anti-extrusion 72 comporte une surface intérieure partiellement cylindrique 76 d'axe X-X. Avantageusement, les éléments anti-extrusion 72 présentent un profil sensiblement identique à celui des éléments de verrouillage 36, la surface extérieure 74 affleurant ainsi la surface extérieure des éléments de verrouillage 36.

En variante, non représentée, les moyens anti-extrusion, c'est-à-dire la bague anti-extrusion 10 et/ou les éléments anti-extrusion 72 peuvent être fixés à la garniture d'étanchéité 8, facilitant ainsi la manipulation de ces composants et rendant de ce fait l'assemblage plus rapide.

A ce sujet, il est particulièrement avantageux que les moyens anti-extrusion soient fabriqués d'un seul tenant avec la garniture d'étanchéité, mais en une matière qui diffère de celle de la garniture d'étanchéité.

## Revendications

1. Jonction tubulaire, du type comprenant
- un bout à emboîtement (4) d'un premier élément de canalisation, muni d'une gorge intérieure (18),
- un bout uni (6) d'un deuxième élément de canalisation inséré dans le bout à emboîtement (4), et
- une garniture d'étanchéité (8) disposée dans la gorge intérieure (18),
la jonction tubulaire comprenant des moyens anti-extrusion (10, 72) adjacents à la garniture d'étanchéité (8) et adaptés pour s'opposer à une extrusion de la garniture d'étanchéité (8) lorsque celle-ci est soumise à la pression d'un fluide circulant dans les éléments de canalisation, la jonction tubulaire comprenant au moins un élément de verrouillage (36) disposé adjacent aux moyens anti-extrusion (10, 72), du côté opposé à la garniture d'étanchéité (8), la garniture d'étanchéité étant comprimée radialement entre le bout uni (6) et le bout à emboîtement (4), les moyens anti-extrusion comprenant une bague anti-extrusion (10), **caractérisée en ce qu'**au moins un élément de verrouillage (36) est fixé à la bague anti-extrusion (10) .

2. Jonction tubulaire selon la revendication 1, **caractérisée en ce que** la bague anti-extrusion (10) est ouverte et comporte deux parties d'extrémité (53A, 53B) qui, à l'état monté dans la gorge intérieure (18), se chevauchent circonférentiellement.

3. Jonction tubulaire selon l'une quelconque des revendications 1 ou 2, **caractérisée en ce que** la bague anti-extrusion (10) est fixée à la garniture d'étanchéité (8).

4. Jonction tubulaire selon l'une quelconque des revendications 1 ou 2, **caractérisée en ce que** la bague anti-extrusion (10) est appliquée librement sur la garniture d'étanchéité (8).

5. Jonction tubulaire selon l'une quelconque des revendications 1 à 4, **caractérisée en ce que** les moyens anti-extrusion comprennent au moins deux éléments anti-extrusion (72) en forme de segment d'anneau.

6. Jonction tubulaire selon la revendication 5, **caractérisée en ce que** les éléments anti-extrusion (72) sont solidaires de la bague anti-extrusion (10).

7. Jonction tubulaire selon l'une quelconque des revendications précédentes, **caractérisée en ce qu'**au moins l'un des éléments de verrouillage (36) est fixé de manière libérable à la bague anti-extrusion (10).

8. Jonction tubulaire selon la revendication 7, **caractérisée en ce que** l'élément de verrouillage (36) est fixé par complémentarité de formes, notamment par encliquetage, à la bague anti-extrusion (10).

9. Jonction tubulaire selon la revendication 5 ou 6, **caractérisée en ce que** le ou chaque élément de verrouillage (36) est inséré dans un interstice (73) formé par les éléments anti-extrusion (72), et **en ce que** les surfaces extérieures d'au moins un élément de verrouillage (36) et d'au moins l'un des éléments anti-extrusion (72) affleurent.

10. Jonction tubulaire selon l'une quelconque des revendications précédentes, **caractérisée en ce que** la bague anti-extrusion (10) comprend des moyens de poussée (70) adaptés pour solliciter le ou chaque élément de verrouillage (36) axialement à l'écart de la garniture d'étanchéité (8).

11. Jonction tubulaire selon la revendication 10, **caractérisée en ce que** les moyens de poussée comprennent une saillie de poussée (70) solidaire de la bague anti-extrusion (10).

12. Jonction tubulaire selon quelconque des revendications précédentes, **caractérisée en ce que** la garniture d'étanchéité (8) comprend des moyens de poussée, notamment une lèvre élastique (24) solidaire de la garniture d'étanchéité (8), adaptés pour solliciter le ou chaque élément de verrouillage (36) axialement à l'écart de la garniture d'étanchéité (8).

13. Jonction tubulaire selon la revendication 11. ou 12, **caractérisée en ce que** les moyens de poussée (70, 24) ont une extrémité libre dirigée radialement vers l'extérieur ou vers l'intérieur.

## Claims

1. Tubular joint, of the type comprising
- an interlocking tip (4) of a first pipe element, equipped with an inner groove (18),
- a smooth tip (6) of a second pipe element inserted in the interlocking tip (4) and,
- a sealing liner (8) arranged in the inner groove (18),
the tubular joint comprising anti-extrusion means (10, 72) adjacent to the sealing liner (8) and suitable for opposing extrusion of the sealing liner (8) when said liner is subjected to the pressure of a fluid circulating in the pipe elements,
the tubular joint comprising at least one locking element (36) arranged adjacent to the anti-extrusion means (10, 72), on the side opposite the sealing liner (8), the sealing liner (8) being compressed radially between the smooth tip (6) and the interlocking tip (4),
the anti-extrusion means comprising an anti-extrusion ring (10), **characterised in that** at least one locking element (36) is fixed to the anti-extrusion ring (10).

2. Tubular joint according to claim 1, **characterised in that** the anti-extrusion ring (10) is open and comprises two end portions (53A, 53B) which, in the assembled state in the inner groove (18), overlap circumferentially.

3. Tubular joint according to claim 1 or claim 2, **characterised in that** the anti-extrusion ring (10) is fixed to the sealing liner (8).

4. Tubular joint according to claim 1 or claim 2, **characterised in that** the anti-extrusion ring (10) is applied freely on the sealing liner ( 8).

5. Tubular joint according to any one of claims 1 to 4, **characterised in that** the anti-extrusion means comprise at least two anti-extrusion elements (72) in the form of a ring segment.

6. Tubular joint according to claim 5, **characterised in that** the anti-extrusion elements (72) are integral with the anti-extrusion ring 10.

7. Tubular joint according to any one of the preceding claims, **characterised in that** at least one of the locking elements (36) is fixed releasably to the anti-extrusion ring (10).

8. Tubular joint according to claim 7, **characterised in that** the locking element (36) is fixed by complementarity of form, in particular by latching, to the anti-extrusion ring (10).

9. Tubular joint according to claim 5 or claim 6, **characterised in that** the or each locking element (36) is inserted in an interstice (73) formed by the anti-extrusion elements (72), and **in that** the outer surfaces of at least one locking element (36) and at least one of the anti-extrusion elements (72) are flush.

10. Tubular joint according to any one of the preceding claims , **characterised in that** the anti-extrusion ring (10) comprises thrust means (70) suitable for stressing the or each locking element (36) axially away from the sealing liner (8).

11. Tubular joint according to claim 10, **characterised in that** the thrust means comprise a thrust projection (70) integral with the anti-extrusion ring (10).

12. Tubular joint according to any one of the preceding claims, **characterised in that** the sealing liner (8) comprises thrust means, in particular a flexible lip (24) integral with the sealing liner (8), suitable for stressing the or each locking element (36) axially away from the sealing liner (8).

13. Tubular joint according to claim 11 or claim 12, **characterised in that** the thrust means (70, 24) have a free end turned radially outwards or inwards.

## Patentansprüche

1. Rohrförmige Verbindung des Typs, der umfasst:
- ein muffenartiges Ende (4) eines eine Innenhohlkehle (18) umfassenden ersten Leitungselements,
- ein glattes Ende (6) eines in das muffenartige Ende (4) eingefügten zweiten Leitungselements,
- eine in der Innenhohlkehle (18) angeordnete Dichtungspackung (8),
wobei die rohrförmige Verbindung verdrängungshemmende Einrichtungen (10, 72) umfasst, die an die Dichtungspackung (8) angrenzen und fähig sind, sich einer Verdrängung der Dichtungspackung (8) zu widersetzen, wenn diese dem Druck eines in den Leitungselementen fließenden Fluids ausgesetzt ist, wobei die rohrförmige Verbindung wenigstens ein Blockierelement (36) umfasst, das auf der der Dichtungspackung (8) entgegengesetzten Seite an die verdrängungshemmenden Einrichtungen (10, 72) angrenzt, wobei die Dichtungspackung radial zwischen dem glatten Ende (6) und dem muffenartigen Ende (4) zusammengepresst wird und die verdrängungshemmenden Einrichtungen einen verdrängungshemmenden Ring (10) umfassen, **dadurch gekennzeichnet, dass** wenigstens ein Blockierelement (36) an dem verdrängungshemmenden Ring (10) befestigt ist.

2. Rohrförmige Verbindung nach Anspruch 1, **dadurch gekennzeichnet, dass** der verdrängungshemmende Ring (10) offen ist und zwei Endteile (53A, 53B) umfasst, die sich im montierten Zustand in der Innenhohlkehle (18) in Umfangrichtung überlappen.

3. Rohrförmige Verbindung nach einem der Ansprüche 1 oder 2, **dadurch gekennzeichnet, dass** der verdrängungshemmende Ring (10) an der Dichtungspackung (8) befestigt ist.

4. Rohrförmige Verbindung nach einem der Ansprüche 1 oder 2, **dadurch gekennzeichnet, dass** der verdrängungshemmende Ring (10) frei an der Dichtungspackung (8) anliegt.

5. Rohrförmige Verbindung nach einem der Ansprüche 1 bis 4, **dadurch gekennzeichnet, dass** die verdrängungshemmenden Einrichtungen wenigstens zwei ringsegmentförmige verdrängungshemmende Elemente (72) umfassen.

6. Rohrförmige Verbindung nach Anspruch 5, **dadurch gekennzeichnet, dass** die verdrängungshemmenden Elemente (72) mit dem verdrängungshemmenden Ring (10) verbunden bzw. aus einem Stück sind.

7. Rohrförmige Verbindung nach einem der vorhergehenden Ansprüche, **dadurch gekennzeichnet, dass** wenigstens eines der Blockierelemente (36) auf lösbare Weise mit dem verdrängungshemmenden Ring (10) verbunden ist.

8. Rohrförmige Verbindung nach Anspruch 7, **dadurch gekennzeichnet, dass** das Blockierelement (36) komplementärförmig an dem verdrängungshemmenden Ring (10) befestigt ist, insbesondere durch Einrastung.

9. Rohrförmige Verbindung nach dem Anspruch 5 oder 6, **dadurch gekennzeichnet, dass** das oder jedes Blockierelement (36) eingefügt ist in einen durch die verdrängungshemmenden Elemente (72) gebildeten Zwischenraum (73), und **dadurch**, dass die Außenoberflächen wenigstens eines Blockierelements (36) und wenigstens eines verdrängungshemmenden Elements (72) bündig sind.

10. Rohrförmige Verbindung nach einem der vorhergehenden Ansprüche, **dadurch gekennzeichnet, dass** der verdrängungshemmende Ring (10) Druckeinrichtungen (70) umfasst, fähig das oder jedes Blockierelement (36) von der Dichtungspackung (8) beabstandet axial zu belasten.

11. Rohrförmige Verbindung nach Anspruch 10, **dadurch gekennzeichnet, dass** die Drückeinrichtungen einen Drückvorsprung (70) aus einem Stück mit dem verdrängungshemmenden Ring (10) umfassen.

12. Rohrförmige Verbindung nach einem der vorhergehenden Ansprüche, **dadurch gekennzeichnet, dass** die Dichtungspackung (8) Drückeinrichtungen umfasst, insbesondere eine elastische Lippe (24) aus einem Stück mit der Dichtungspackung (8), fähig das oder jedes Blockierelement (36) von der Dichtungspackung (8) beabstandet axial zu belasten.

13. Rohrförmige Verbindung nach dem Anspruch 11 oder 12, **dadurch gekennzeichnet, dass** die Drückeinrichtungen (70, 24) ein radial nach außen oder nach innen gerichtetes freies Ende aufweisen.
